# EUROPEAN PATENT APPLICATION

(11) **EP 4 383 378 A1**
(43) Date of publication of application: **12.06.2024**
(21) Application number: 22852668.7
(22) Date of filing: 08.06.2022
(51) Int. Cl.: H01M 4/86, C25B 9/23, C25B 11/054, C25B 11/065, C25B 11/069, C25B 11/081, H01M 4/88, H01M 8/10

(54) **MEMBRANE ELECTRODE ASSEMBLY, METHOD FOR MANUFACTURING MEMBRANE ELECTRODE ASSEMBLY, AND ELECTROCHEMICAL DEVICE**

(30) Priority: 03.08.2021 JP 2021127680
(71) Applicant: Panasonic Intellectual Property Management Co., Ltd., Kadoma-shi, Osaka 571-0057 (JP)
(72) Inventor: FUJII Takahiro, Kadoma-shi, Osaka 571-0057 (JP); TAKEDA Kenyu, Kadoma-shi, Osaka 571-0057 (JP); YAMAGUCHI Yasushi, Kadoma-shi, Osaka 571-0057 (JP)
(74) Representative: Grünecker Patent- und Rechtsanwälte PartG mbB
(86) International application number: PCT/JP2022/023150
(87) International publication number: WO 2023/013241

(57) **Abstract**

In a membrane electrode assembly (113), a cathode catalyst layer (109) includes a catalyst, an electrically conductive support that supports the catalyst, and an ionomer having a proton conductivity. The cathode catalyst layer (109) includes an inner portion that is in contact with an electrolyte membrane (102) and an outer portion that is in contact with or is opposite to the cathode gas diffusion layer (110). When a ratio of a mass of the ionomer to a mass of the support is defined as an ionomer presence ratio, the ionomer presence ratio in the inner portion is lower than the ionomer presence ratio in the outer portion. The state of coverage of the support with the ionomer in the inner portion is different from the state of coverage of the support with the ionomer in the outer portion.

## Description

### TECHNICAL FIELD

The present disclosure relates to a membrane electrode assembly, a method for manufacturing the membrane electrode assembly, and an electrochemical device.

### BACKGROUND ART

For example, Patent Literature (PTL) 1 discloses a fuel battery cell that has excellent performance in both drainage and water retention, that is, water management, and is capable of achieving a non-humidified operation of a fuel battery. The fuel battery cell includes electrode catalysts and catalyst layers formed of the electrode catalysts. The electrode catalysts include a carbon support that supports the catalysts and a polymer electrolyte. The water-immersion pH of the carbon support is at most 1.

### Citation List

### Patent Literature

[PTL 1] Japanese Unexamined Patent Application Publication No. 2011-14488

### SUMMARY OF THE INVENTION

In conventional techniques, it is desired to reduce the degradation of the catalysts in the cathode catalyst layer.

In view of the above, the present disclosure provides a membrane electrode assembly, a method for manufacturing the membrane electrode assembly, and an electrochemical device that are capable of reducing degradation of catalysts in a cathode catalyst layer.

A membrane electrode assembly according to one aspect of the present disclosure includes: an anode; a cathode; and an electrolyte membrane that is disposed between the anode and the cathode and has a proton conductivity. The cathode includes a cathode gas diffusion layer, and a cathode catalyst layer disposed between the cathode gas diffusion layer and the electrolyte membrane. The electrolyte membrane includes a surface that is in contact with the cathode catalyst layer, and the surface is flat. The cathode catalyst layer includes a catalyst, a support that supports the catalyst and is electrically conductive, and an ionomer having a proton conductivity. The cathode catalyst layer includes an inner portion that is in contact with the electrolyte membrane and an outer portion that is in contact with or is opposite to the cathode gas diffusion layer. When a ratio of a mass of the ionomer to a mass of the support is defined as an ionomer presence ratio, the ionomer presence ratio in the inner portion is lower than the ionomer presence ratio in the outer portion, and a state of coverage of the support with the ionomer in the inner portion is different from a state of coverage of the support with the ionomer in the outer portion.

In another aspect, a method for manufacturing a membrane electrode assembly according to one aspect of the present disclosure includes forming an inner portion of a cathode catalyst layer on a surface of an electrolyte membrane having a proton conductivity by using a first solution that contains a catalyst and a solvent and does not contain an ionomer. The method also includes forming an outer portion of the cathode catalyst layer to be disposed between the inner portion of the cathode catalyst layer and a cathode gas diffusion layer by using a second solution that contains the ionomer, the catalyst, and the solvent.

In another aspect, an electrochemical device according to one aspect of the present disclosure includes the membrane electrode assembly according to the present disclosure.

The membrane electrode assembly, the method for manufacturing the membrane electrode assembly, and the electrochemical device according to the present disclosure are capable of reducing degradation of the catalysts in the cathode catalyst layer.

### BRIEF DESCRIPTION OF THE DRAWINGS

[FIG. 1] FIG. 1 is a schematic cross-sectional view illustrating a configuration of a polymer electrolyte fuel cell according to Embodiment 1.
[FIG. 2] FIG. 2 is a partially enlarged cross-sectional view illustrating a structure of a cathode catalyst layer according to Embodiment 1.
[FIG. 3] FIG. 3 schematically illustrates a layered structure of the cathode catalyst layer according to Embodiment 1.
[FIG. 4] FIG. 4 is a partially enlarged cross-sectional view illustrating a state of catalysts and a support included in an inner portion according to Embodiment 1.
[FIG. 5] FIG. 5 is a partially enlarged cross-sectional view illustrating a state of the catalysts and the support included in an intermediate portion according to Embodiment 1.
[FIG. 6] FIG. 6 is a partially enlarged cross-sectional view illustrating a state of the catalysts and the support included in an outer portion according to Embodiment 1.
[FIG. 7] FIG. 7 is a process diagram illustrating a method for manufacturing a cathode catalyst layer according to Embodiment 1.

### DESCRIPTION OF EMBODIMENT

### (Underlying Knowledge Forming Basis of the Present Disclosure)

At the time when the inventors of the present application arrived at the present disclosure, in order that catalysts are used effectively in a cathode catalyst layer in a fuel cell, it was recognized that the formation of a triple phase boundary in the cathode catalyst layer was important. The triple phase boundary is the boundary between the support, catalysts, and ionomer (polyelectrolyte). The triple phase boundary allows the transfer of protons (H⁺) and electrons (e⁻). In order to achieve both water retention and drainage properties, there was also a technique to uniformly coat the ionomer over the support by imparting hydrophilic properties to the surface of the support in the cathode catalyst layer.

Under these circumstances, the inventors investigated the causes of catalyst degradation in the cathode catalyst layer. As a result, the inventors have found that poisoning of the catalysts by the ionomer degraded the catalysts. Specifically, the catalysts can be poisoned by a functional group such as sulfonic acid group, in particular, a functional group containing sulfur atoms.

The inventors have arrived at the subject matter of the present disclosure to reduce the poisoning of the catalysts by the ionomer and to reduce the degradation of the catalysts in the cathode catalyst layer.

Hereinafter, an embodiment will be described in detail with reference to the drawings. However, more detailed explanation than necessary may be omitted. For example, detailed explanations of already well-known matters or duplicate explanations for substantially the same configuration may be omitted.

It should be noted that the accompanying drawings and the following description are provided for those skilled in the art to fully understand the present disclosure, and are not intended to limit the subject matter described in the claims.

### (Embodiment 1)

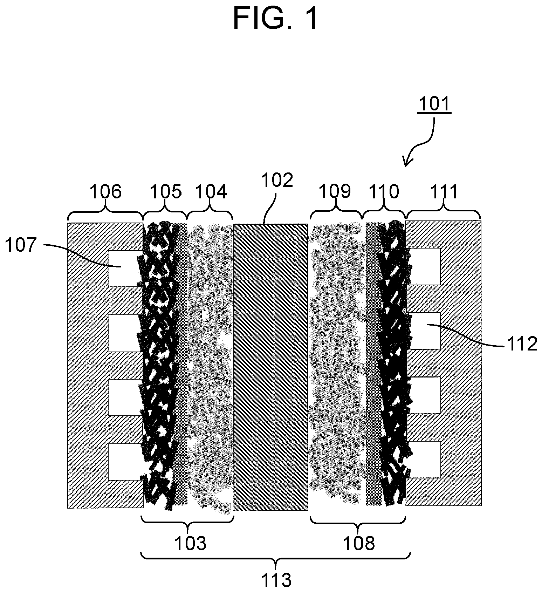

Hereinafter, Embodiment 1 according to the present disclosure will be described with reference to FIG. 1 to FIG. 7.

### [1-1. Configuration]

FIG. 1 is a schematic cross-sectional view illustrating a configuration of polymer electrolyte fuel cell 101 according to Embodiment 1. Polymer electrolyte fuel cell 101 is an example of an electrochemical device according to the present disclosure. As illustrated in FIG. 1, polymer electrolyte fuel cell 101 includes membrane electrode assembly 113, anode separator 106, and cathode separator 111. Membrane electrode assembly 113 is disposed between anode separator 106 and cathode separator 111.

Membrane electrode assembly 113 can also be used in other electrochemical devices such as hydrogen purification devices that purify hydrogen.

Membrane electrode assembly 113 includes anode 103, electrolyte membrane 102, and cathode 108. Anode 103 is joined to one surface of electrolyte membrane 102. Cathode 108 is joined to the other surface of electrolyte membrane 102. Anode 103 and cathode 108 correspond to a first electrode and a second electrode, respectively.

Electrolyte membrane 102 is made of a polymeric material having a proton conductivity. Typically, electrolyte membrane 102 is a perfluorocarbon sulfonic acid-based polyelectrolyte membrane containing sulfonic acid group or hydrocarbon-based polyelectrolyte membrane.

Electrolyte membrane 102 is disposed between anode 103 and cathode 108. Electrolyte membrane 102 includes a surface that is in contact with anode catalyst layer 104 and a surface that is in contact with cathode catalyst layer 109. These surfaces are flat surfaces. The flat surfaces of electrolyte membrane 102 lead to good drainage on the surfaces of electrolyte membrane 102. The term "flat surface" refers to a surface that has not been processed to have irregularities. The term "flat surface" also includes a surface that is intended to be flat, but has slight irregularities due to errors or the like.

Anode 103 includes anode catalyst layer 104 and anode gas diffusion layer 105. Anode catalyst layer 104 is disposed between electrolyte membrane 102 and anode gas diffusion layer 105. Cathode 108 includes cathode catalyst layer 109 and cathode gas diffusion layer 110. Cathode catalyst layer 109 is disposed between electrolyte membrane 102 and cathode gas diffusion layer 110.

Anode catalyst layer 104 has a function of promoting an electrochemical reaction that dissociates hydrogen into protons. Anode catalyst layer 104 includes catalysts 302 and ionomer 304. More specifically, anode catalyst layer 104 includes catalysts 302, carbon particles that support catalysts 302 (conductive support 303), and ionomer 304.

Anode gas diffusion layer 105 has functions of supplying hydrogen-containing gas to anode catalyst layer 104 and receiving electrons from anode catalyst layer 104. Anode gas diffusion layer 105 is made of materials that are gas permeable and electrically conductive. Anode gas diffusion layer 105 includes, as a main material, for example, an electrically conductive porous body. An example of the porous body is a carbon fiber aggregate such as carbon paper.

Cathode catalyst layer 109 has a function of promoting an electrochemical reaction that produces water from protons and oxygen. Cathode catalyst layer 109 includes catalysts 302 and ionomer 304. In detail, cathode catalyst layer 109 includes catalysts 302, carbon particles that support catalysts 302 (conductive support 303), and ionomer 304 having a proton conductivity.

Cathode gas diffusion layer 110 has functions of supplying oxidant gas to cathode catalyst layer 109 and transferring electrons to cathode catalyst layer 109. Cathode gas diffusion layer 110 is made of materials that are gas permeable and electrically conductive. Cathode gas diffusion layer 110 includes, as a main material, for example, an electrically conductive porous body. An example of the porous body is a carbon fiber aggregate such as carbon paper.

Anode separator 106 includes anode gas channels 107 that are channels for anode gas. Cathode separator 111 includes cathode gas channels 112 that are channels for cathode gas. Each of anode separator 106 and cathode separator 111 is made of electrically conductive materials such as carbon or metal. Each of anode separator 106 and cathode separator 111 may include a corrosion-resistant coating such as resin or plating to prevent corrosion.

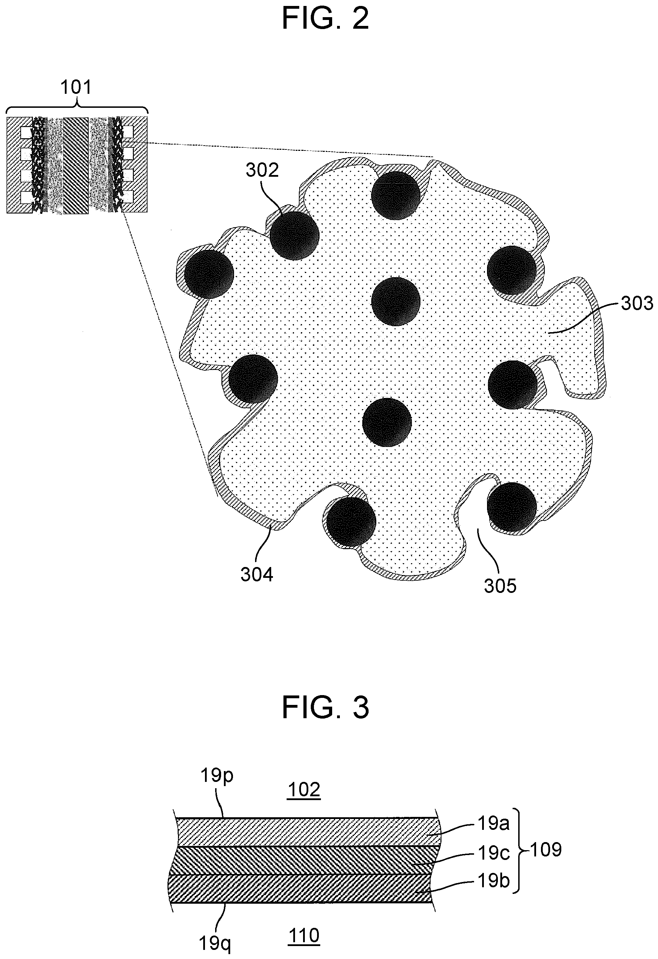

FIG. 2 is a partially enlarged cross-sectional view illustrating a structure of cathode catalyst layer 109. As illustrated in FIG. 2, cathode catalyst layer 109 includes, as electrode catalysts, support 303, catalysts 302, and ionomer 304.

Catalysts 302 can be particles of a noble metal such as platinum, or platinum alloy. Examples of the platinum alloy include an alloy of platinum and at least one selected from the group consisting of cobalt, nickel, ruthenium, and palladium.

Support 303 is an electrically conductive material such as carbon particles, and supports particles of catalysts 302. Examples of the carbon particles include particles of carbon black, such as ketjen black or acetylene black. The surface of support 303 has a plurality of pores 305 that are open. In other words, the surface of support 303 has irregularities. The specific surface area of support 303 is, for example, at least 1000 m²/g. The particles of catalysts 302 may be present inside or outside pores 305 of support 303.

Ionomer 304 is an electrolyte that has a proton conductivity, and connects catalysts 302 and support 303 in a state that allows proton conduction. Examples of ionomer 304 include perfluorocarbon sulfonic acid-based polymeric materials containing sulfonic acid group and hydrocarbon-based polymeric materials. Ionomer 304 typically includes perfluorocarbon sulfonic acid-based polyelectrolyte containing sulfonic acid group. Ionomer 304 may be made of the same materials as electrolyte membrane 102.

Anode catalyst layer 104 has a structure that is identical to the structure of cathode catalyst layer 109. However, the composition of catalysts 302 in anode catalyst layer 104 may be different from the composition of catalysts 302 in cathode catalyst layer 109.

The structure of cathode catalyst layer 109 will be described in more detail.

FIG. 3 schematically illustrates a layered structure of cathode catalyst layer 109. As illustrated in FIG. 3, cathode catalyst layer 109 includes inner portion 19a, outer portion 19b, and intermediate portion 19c. Inner portion 19a is in contact with electrolyte membrane 102. Outer portion 19b is in contact with or opposite to cathode gas diffusion layer 110. Intermediate portion 19c is a layer disposed between inner portion 19a and outer portion 19b. Cathode catalyst layer 109 includes surface 19p that is in contact with electrolyte membrane 102 and surface 19q that is in contact with cathode gas diffusion layer 110. Intermediate portion 19c may be omitted. Cathode catalyst layer 109 does not have to be in direct contact with cathode gas diffusion layer 110. Assuming that each of inner portion 19a, intermediate portion 19c, and outer portion 19b has a thickness that is 1/3 of the thickness of cathode catalyst layer 109, inner portion 19a and outer portion 19b are as follows.

In other words, when the ratio of the mass of ionomer 304 to the mass of support 303 is defined as an ionomer presence ratio, the ionomer presence ratio in inner portion 19a is lower than the ionomer presence ratio in outer portion 19b. The state of coverage of support 303 with ionomer 304 in inner portion 19a is different from the state of coverage of support 303 with ionomer 304 in outer portion 19b. The percentage of the particles of catalysts 302 that are not in contact with ionomer 304 in inner portion 19a is higher than the percentage of the particles of catalysts 302 that are not in contact with ionomer 304 in outer portion 19b.

With the above configuration, poisoning of catalysts 302 by the functional group (for example, sulfonic acid group) contained in ionomer 304 can be reduced in inner portion 19a that is in contact with electrolyte membrane 102. This reduces the dissolution and aggregation of catalysts 302 and deposition of catalysts 302 in electrolyte membrane 102, leading to an increased durability of membrane electrode assembly 113 and polymer electrolyte fuel cell 101 (electrochemical device including membrane electrode assembly 113). Since the poisoned catalysts do not contribute to the electrochemical reaction, the electrochemical reaction is selectively promoted in the non-poisoned catalysts. As a result, the dissolution and aggregation of catalysts whose electrochemical reaction has been promoted and deposition of catalysts 302 in electrolyte membrane 102 are likely to progress.

Proton transfer in inner portion 19a can be complemented by water. Protons transfer from anode 103 to cathode 108 through electrolyte membrane 102, so that the closer they are to electrolyte membrane 102, the more likely an area where protons and oxygen react will be formed. In other words, the closer to electrolyte membrane 102, the more water there is. Accordingly, even if the amount of ionomer 304 in the portion close to electrolyte membrane 102 is reduced, proton conduction is less likely to be affected, and the performance of membrane electrode assembly 113 as a whole is maintained.

The ionomer presence ratio can be determined, for example, by examining the elemental distribution of a cross section of cathode catalyst layer 109. The cross section is parallel to the thickness direction of membrane electrode assembly 113. The elemental distribution can be examined using electron probe micro-analyzer (EPMA), and energy dispersive X-ray spectroscopy (SEM-EDS).

Inner portion 19a may or may not contain ionomer 304. Inner portion 19a may contain a polymeric material with no proton conductivity as a binder in place of or together with ionomer 304.

For example, the ionomer presence ratio in inner portion 19a is the lowest in cathode catalyst layer 109. For example, the ionomer presence ratio in outer portion 19b is the highest in cathode catalyst layer 109. With this configuration, membrane electrode assembly 113 and polymer electrolyte fuel cell 101 are capable of achieving an efficient reaction between protons and oxygen while reducing poisoning of catalysts 302.

The ionomer presence ratio in intermediate portion 19c may be between the ionomer presence ratio in inner portion 19a and the ionomer presence ratio in outer portion 19b. With this configuration, membrane electrode assembly 113 and polymer electrolyte fuel cell 101 are capable of achieving an efficient reaction between protons and oxygen while reducing poisoning of catalysts 302.

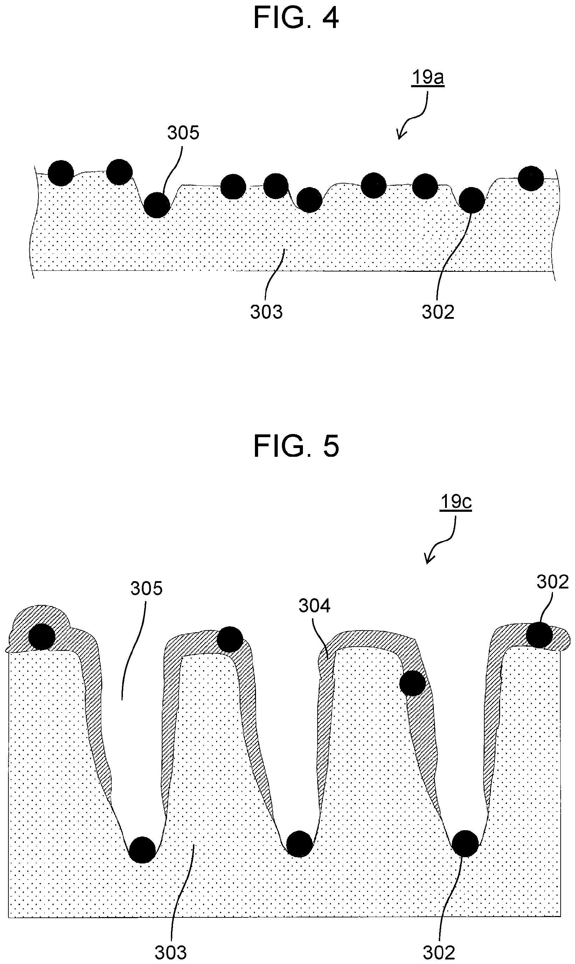

FIG. 4 illustrates a partially enlarged cross-sectional view illustrating a state of catalysts 302 and support 303 in inner portion 19a. In the configuration of inner portion 19a illustrated in FIG. 4, catalysts 302 and support 303 are not covered with ionomer 304. In this configuration, the medium that aids in proton transfer is water. The ionomer presence ratio in inner portion 19a may be, for example, less than 0.5 and at most 0.1. In other words, the ionomer presence ratio in surface 19p of cathode catalyst layer 109 that is in contact with electrolyte membrane 102 may be less than 0.5 and at most 0.1. The lower limit of the ionomer presence ratio is not particularly limited and may be zero. With this configuration, membrane electrode assembly 113 and polymer electrolyte fuel cell 101 are capable of further reducing poisoning of catalysts 302 in inner portion 19a.

FIG. 5 is a partially enlarged cross-sectional view illustrating a state of catalysts 302 and support 303 in intermediate portion 19c. In the configuration of intermediate portion 19c illustrated in FIG. 5, support 303 is partially covered with ionomer 304. Catalysts 302 in pores 305 of support 303 are not covered with ionomer 304. In this configuration, the medium that aids in proton transfer is ionomer 304 and water. The ionomer presence ratio in intermediate portion 19c is, for example, in the range from 0.2 to 1.0.

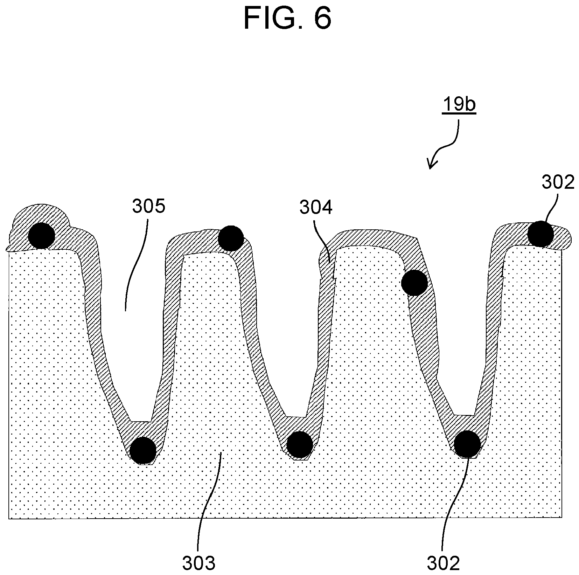

FIG. 6 is a partially enlarged cross-sectional view illustrating a state of catalysts 302 and support 303 in outer portion 19b. In the configuration of outer portion 19b illustrated in FIG. 6, support 303 is fully covered with ionomer 304. Ionomer 304 is also present in all of pores 305 of support 303, and also covers catalysts 302 in pores 305. In outer portion 19b, ionomer 304 covers the entire surface of support 303. Almost all of catalysts 302 in pores 305 of support 303 is covered with ionomer 304. The ionomer presence ratio in outer portion 19b is, for example, greater than 1.0. With this configuration, membrane electrode assembly 113 and polymer electrolyte fuel cell 101 are capable of ensuring the proton conductivity of cathode catalyst layer 109 as a whole.

As described above, particles of support 303 having an entire surface that is exposed are present in inner portion 19a. In outer portion 19b and intermediate portion 19c, particles of support 303 having a surface that is at least partially covered with ionomer 304 are present. With this configuration, membrane electrode assembly 113 and polymer electrolyte fuel cell 101 are capable of ensuring the proton conductivity of cathode catalyst layer 109 as a whole, while reducing poisoning of catalysts 302 in inner portion 19a.

Membrane electrode assembly 113 according to the present embodiment can be manufactured using a single (one type of) ionomer 304. The ion exchange group equivalent weight of ionomer 304 in inner portion 19a of cathode catalyst layer 109 is equal to the ion exchange group equivalent weight of ionomer 304 in outer portion 19b of cathode catalyst layer 109. The "ion exchange group equivalent weight" is expressed by the mass of the polymer when it has 1 mol (6.02 × 10²³) of functional group (e.g. sulfonic acid group). The unit of ion exchange group equivalent weight is "g/mol".

Next, a method for manufacturing membrane electrode assembly 113 will be described.

An electrolyte membrane with catalyst layers is obtained by first forming anode catalyst layer 104 on one surface of electrolyte membrane 102 and cathode catalyst layer 109 on the other surface of electrolyte membrane 102. Next, the electrolyte membrane with catalyst layers is sandwiched between anode gas diffusion layer 105 and cathode gas diffusion layer 110, and these are thermally pressed together to obtain membrane electrode assembly 113.

Anode catalyst layer 104 is manufactured, for example, by the following method. A solution that contains: support 303 supporting catalysts 302; ionomer 304; and solvent is applied to electrolyte membrane 102 to form a coating film, and the coating film is dried to remove the solvent to obtain anode catalyst layer 104.

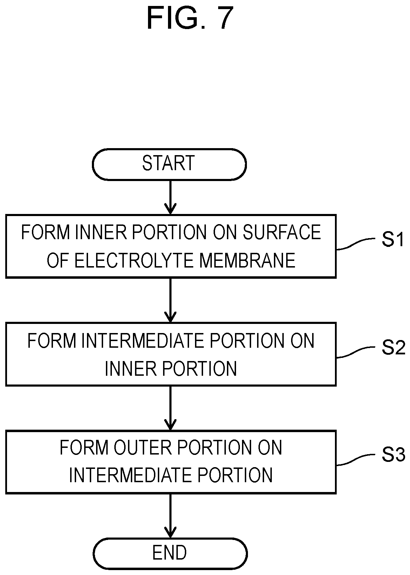

FIG. 7 is a process diagram illustrating a method for manufacturing cathode catalyst layer 109.

In step S1, inner portion 19a is formed on the surface of electrolyte membrane 102. Specifically, inner portion 19a is formed on the surface of electrolyte membrane 102 by using a first solution that does not contain ionomer 304 but contains catalysts 302 and solvent. More precisely, inner portion 19a can be formed by applying the first solution to electrolyte membrane 102 to form a coating film and removing the solvent from the coating film. Catalysts 302 are supported by support 303. The first solution may contain a polymeric material as a binder.

In step S2, intermediate portion 19c is formed on inner portion 19a. Specifically, a third solution that contains ionomer 304, catalysts 302, and solvent is used to form intermediate portion 19c of cathode catalyst layer 109. More specifically, intermediate portion 19c can be formed by applying the third solution to inner portion 19a to form a coating film and removing the solvent from the coating film. In step S2, inner portion 19a and intermediate portion 19c are integrated.

In step S3, outer portion 19b is formed on intermediate portion 19c. Specifically, a second solution that contains ionomer 304, catalysts 302, and solvent is used to form outer portion 19b to be disposed between inner portion 19a and cathode gas diffusion layer 110. More specifically, outer portion 19b can be formed by applying the second solution to intermediate portion 19c to form a coating film and removing the solvent from the coating film. In step S3, inner portion 19a, intermediate portion 19c, and outer portion 19b are integrated to form cathode catalyst layer 109.

By performing steps S1 to S3, cathode catalyst layer 109 with an appropriate ionomer presence ratio can be easily manufactured.

The concentration of ionomer 304 (unit: g/liter) in the third solution used to form intermediate portion 19c is lower than the concentration of ionomer 304 in the second solution used to form outer portion 19b. This results in the configuration of intermediate portion 19c and outer portion 19b described with reference to FIG. 5 and FIG. 6.

The first solution used to form inner portion 19a may contain ionomer 304. In this case, the concentration of ionomer 304 in the first solution is lower than the concentration of ionomer 304 in the second solution, and is lower than the concentration of ionomer 304 in the third solution.

The concentrations of catalysts 302 in the first, second and third solutions are equal to each other. The composition of each solution (concentration of ionomer 304 in each solution) is appropriately adjusted so that the respective ionomer presence ratios of inner portion 19a, outer portion 19b, and intermediate portion 19c fall within the previously described ranges.

The first solution, the second solution, and the third solution can be prepared by dispersing the powder of support 303 that supports catalysts 302 in an aqueous solution of ionomer and then mixing it with a volatile solvent such as ethanol, isopropanol, or the like.

### [1-2. Operation]

The operation and effect of polymer electrolyte fuel cell 101 configured as described above will be described below with reference to FIG. 1.

Hydrogen-containing gas is supplied to anode gas channels 107, and oxidant gas is supplied to cathode gas channels 112. The oxidant gas is typically air. In anode 103, hydrogen (H₂) is split into protons (H⁺) and electrons (e⁻) in an electrochemical reaction expressed by the formula (1) below. Protons conduct through electrolyte membrane 102 and transfer from anode 103 to cathode 108. Electrons transfer from anode 103 to cathode 108 through an external circuit. In cathode 108, water (H₂O) is generated by the electrochemical reaction of protons, oxygen (O₂), and electrons expressed by the formula (2) below.

H₂ - 2H⁺ + 2e⁻ (1)

4H⁺ + Q₂ + 2e⁻ → 2H₂O (2)

### [1-3. Advantageous Effects, etc.]

As described above, in the present embodiment, membrane electrode assembly 113 includes anode 103, cathode 108, and electrolyte membrane 102 having a proton conductivity and disposed between anode 103 and cathode 108. Cathode 108 includes cathode gas diffusion layer 110 and cathode catalyst layer 109 disposed between cathode gas diffusion layer 110 and electrolyte membrane 102. Electrolyte membrane 102 includes a surface that is in contact with cathode catalyst layer 109. The surface of electrolyte membrane 102 that is in contact with cathode catalyst layer 109 is flat. Cathode catalyst layer 109 includes catalysts 302, electrically conductive support 303 that supports catalysts 302, and ionomer 304 having a proton conductivity. Cathode catalyst layer 109 includes inner portion 19a that is in contact with electrolyte membrane 102 and outer portion 19b that is in contact with or is opposite to cathode gas diffusion layer 110. When the ratio of the mass of ionomer 304 to the mass of support 303 is defined as an ionomer presence ratio, the ionomer presence ratio in inner portion 19a is lower than the ionomer presence ratio in outer portion 19b. The state of coverage of support 303 with ionomer 304 in inner portion 19a is different from the state of coverage of support 303 with ionomer 304 in outer portion 19b. With this, membrane electrode assembly 113 according to the present embodiment is capable of reducing poisoning of catalysts 302 by the functional group (e.g., sulfonic acid group) contained in ionomer 304 in inner portion 19a that is in contact with electrolyte membrane 102. In other words, membrane electrode assembly 113 is capable of reducing the degradation of catalysts 302 in cathode catalyst layer 109.

In the present embodiment, the ionomer presence ratio in inner portion 19a may be the lowest in cathode catalyst layer 109. With this, membrane electrode assembly 113 is capable of achieving an efficient reaction between protons and oxygen while reducing poisoning of catalysts 302.

Moreover, in the present embodiment, cathode catalyst layer 109 may include surface 19p that is in contact with electrolyte membrane 102, and the ionomer presence ratio in surface 19p that is in contact with electrolyte membrane 102 may be less than 0.5. With this, membrane electrode assembly 113 is capable of further reducing poisoning of catalysts 302 in inner portion 19a.

In the present embodiment, the ionomer presence ratio in outer portion 19b may be the highest in cathode catalyst layer 109. With this, membrane electrode assembly 113 is capable of achieving an efficient reaction between protons and oxygen while reducing poisoning of catalysts 302.

In the present embodiment, ionomer 304 may cover the entire surface of support 303 in outer portion 19b. With this, membrane electrode assembly 113 is capable of ensuring the proton conductivity of cathode catalyst layer 109 as a whole.

Moreover, in the present embodiment, particles of support 303 having a surface that is partially covered with ionomer 304 may be present in outer portion 19b, and particles of support 303 having an entire surface that is exposed may be present in inner portion 19a. With this, membrane electrode assembly 113 is capable of ensuring the proton conductivity of cathode catalyst layer 109 as a whole while reducing poisoning of catalysts 302 in inner portion 19a.

Moreover, in the present embodiment, the ion exchange group equivalent weight of ionomer 304 in inner portion 19a may be equal to the ion exchange group equivalent weight of ionomer 304 in outer portion 19b. With this, membrane electrode assembly 113 can be manufactured using single (one type of) ionomer 304.

Moreover, in the present embodiment, cathode catalyst layer 109 may further include intermediate portion 19c disposed between inner portion 19a and outer portion 19b. The ionomer presence ratio in intermediate portion 19c may be between the ionomer presence ratio in inner portion 19a and the ionomer presence ratio in outer portion 19b. With this, membrane electrode assembly 113 is capable of achieving an efficient reaction between protons and oxygen while reducing poisoning of catalysts 302.

The method for manufacturing membrane electrode assembly 113 according to the present embodiment includes forming inner portion 19a of cathode catalyst layer 109 on the surface of electrolyte membrane 102 having a proton conductivity, by using a first solution that does not contain ionomer 304 but contains catalysts 302 and solvent. The method for manufacturing membrane electrode assembly 113 also includes forming outer portion 19b of cathode catalyst layer 109, to be disposed between inner portion 19a of cathode catalyst layer 109 and cathode gas diffusion layer 110, by using a second solution that contains ionomer 304, catalysts 302 and solvent. Such a method is capable of easily manufacturing cathode catalyst layer 109 with an appropriate ionomer presence ratio. It is also possible to obtain membrane electrode assembly 113 that is capable of reducing degradation of catalysts 302 of cathode catalyst layer 109.

In the present embodiment, polymer electrolyte fuel cell (electrochemical device) 101 includes membrane electrode assembly 113. Polymer electrolyte fuel cell (electrochemical device) 101 includes membrane electrode assembly 113 so that the degradation of catalysts 302 in cathode catalyst layer 109 can be reduced, leading to an increase in durability.

### INDUSTRIAL APPLICABILITY

The membrane electrode assembly according to the present disclosure is useful, for example, in an electrochemical device, such as a fuel cell or a hydrogen purification device.

### REFERENCE MARKS IN THE DRAWINGS

- 19a: inner portion
- 19b: outer portion
- 19c: intermediate portion
- 19p: surface that is in contact with an electrolyte membrane
- 19q: surface that is in contact with a cathode gas diffusion layer
- 101: polymer electrolyte fuel cell (electrochemical device)
- 102: electrolyte membrane
- 103: anode
- 104: anode catalyst layer
- 105: anode gas diffusion layer
- 106: anode separator
- 107: anode gas channel
- 108: cathode
- 109: cathode catalyst layer
- 110: cathode gas diffusion layer
- 111: cathode separator
- 112: cathode gas channel
- 113: membrane electrode assembly
- 302: catalyst
- 303: support
- 304: ionomer
- 305: pore

## Claims

1. A membrane electrode assembly comprising:
an anode;
a cathode; and
an electrolyte membrane disposed between the anode and the cathode, the electrolyte membrane having a proton conductivity,
wherein the cathode includes a cathode gas diffusion layer, and a cathode catalyst layer disposed between the cathode gas diffusion layer and the electrolyte membrane,
the electrolyte membrane includes a surface that is in contact with the cathode catalyst layer, the surface being flat,
the cathode catalyst layer includes a catalyst, a support that supports the catalyst and is electrically conductive, and an ionomer having a proton conductivity, the cathode catalyst layer including an inner portion that is in contact with the electrolyte membrane and an outer portion that is in contact with or is opposite to the cathode gas diffusion layer,
when a ratio of a mass of the ionomer to a mass of the support is defined as an ionomer presence ratio, the ionomer presence ratio in the inner portion is lower than the ionomer presence ratio in the outer portion, and
a state of coverage of the support with the ionomer in the inner portion is different from a state of coverage of the support with the ionomer in the outer portion.

2. The membrane electrode assembly according to claim 1,
wherein the ionomer presence ration in the inner portion is the lowest in the cathode catalyst layer.

3. The membrane electrode assembly according to claim 1 or claim 2,
wherein the cathode catalyst layer includes a surface that is in contact with the electrolyte membrane, and
the ionomer presence ratio in the surface of the cathode catalyst layer that is in contact with the electrolyte membrane is less than 0.5.

4. The membrane electrode assembly according to any one of claims 1 to 3,
wherein the ionomer presence ratio in the outer portion is the highest in the cathode catalyst layer.

5. The membrane electrode assembly according to claim 4,
wherein the ionomer covers an entire surface of the support in the outer portion.

6. The membrane electrode assembly according to any one of claims 1 to 5,
wherein particles of the support having a surface that is at least partially covered with the ionomer are present in the outer portion, and
particles of the support having an entire surface that is exposed are present in the inner portion.

7. The membrane electrode assembly according to claim 6,
wherein an ion exchange group equivalent weight of the ionomer in the inner portion is equal to an ion exchange group equivalent weight of the ionomer in the outer portion.

8. The membrane electrode assembly according to any one of claims 1 to 7,
wherein the cathode catalyst layer further includes an intermediate portion disposed between the inner portion and the outer portion, and
the ionomer presence ratio in the intermediate portion is between the ionomer presence ratio in the inner portion and the ionomer presence ratio in the outer portion.

9. A method for manufacturing a membrane electrode assembly, the method comprising:
forming an inner portion of a cathode catalyst layer on a surface of an electrolyte membrane having a proton conductivity by using a first solution that contains a catalyst and a solvent and does not contain an ionomer; and
forming an outer portion of the cathode catalyst layer to be disposed between the inner portion of the cathode catalyst layer and a cathode gas diffusion layer by using a second solution that contains the ionomer, the catalyst, and the solvent.

10. An electrochemical device comprising:
the membrane electrode assembly according to any one of claims 1 to 8.
